# EUROPÄISCHE PATENTANMELDUNG

(11) **EP 2 683 220 A1**
(43) Veröffentlichungstag der Anmeldung: **08.01.2014**
(21) Anmeldenummer: 13165730.6
(22) Anmeldetag: 29.04.2013
(51) Int. Cl.: H05B 33/08

(54) **Anordnung und Verfahren zur Ansteuerung von Leuchtdioden in Abhängigkeit vom Eingangsspannungspegel, mittels Zweigschalter**

(30) Priorität: 04.07.2012 EP 12174995; 31.01.2013 DE 102013100992
(71) Anmelder: Zentrum Mikroelektronik Dresden AG, 01109 Dresden (DE)
(72) Erfinder: Müsch, Erhard, 59368 Werne (DE)
(74) Vertreter: Lippert, Stachow & Partner

(57) **Zusammenfassung**

Anordnung und Verfahren zur Ansteuerung von Leuchtdioden Der Erfindung, welche eine Anordnung und ein Verfahren zur Ansteuerung von Leuchtdioden betrifft, liegt die Aufgabe zugrunde, eine Lösung zur Ansteuerung von Leuchtdioden anzugeben, womit eine verbesserte Ansteuerung der LEDs ohne eine Verschlechterung des Wirkungsgrades und/oder des Oberwellengehalts erreicht wird. Die Aufgabe wird verfahrensseitig dadurch gelöst, dass die zweiten Anschlüsse aller Segmente der Kette über je ein Schaltmittel (9, 10) mit einem Mittel (8) zur Erzeugung eines konstanten Stroms verbindbar sind, woraus sich eine Anzahl n von Stufen ergibt, welche jeweils ein n-tes Segment (6) und ein zugehöriges n-tes Schaltmittel umfassen, dass bei einer Amplitude der Eingangswechselspannung (VDC) von null Volt alle Schaltmittel (9, 10) aller n Stufen durchgeschaltet sind, dass ein Vergleich zwischen einer n-ten Referenzspannung und einer Knotenspannung erfolgt, welche am zweiten Anschluss eines Segmentes der Stufe n+1 messbar ist und dass für den Fall, dass die n-te Referenzspannung kleiner als die zugehörige Knotenspannung wird, dass Schaltmittel der n-ten Stufe gesperrt wird.

## Beschreibung

Die Erfindung betrifft eine Anordnung zur Ansteuerung von Leuchtdioden, mit einem Eingang, an welchen eine Eingangswechselspannung anlegbar ist und einer mit den Ausgängen der Anordnung zur Ansteuerung von Leuchtdioden verbundenen Kette von in einer Reihe geschalteten LEDs, welche in mindestens zwei Segmente unterteilt ist und wobei jedes Segment der Kette mit einem Ende zumindest mittelbar mit einer Konstantstromquelle verbunden ist.

Die Erfindung betrifft auch ein Verfahren zur Ansteuerung von Leuchtdioden, bei welchem eine Kette von in Reihe geschalteten Leuchtdioden bereitgestellt wird, welche in Segmente unterteilt ist, wobei jedes Segment mehrere Leuchtdioden beinhaltet und einen ersten Anschluss sowie einen zweiten Anschluss aufweist und wobei die Kette mit einer gleichgerichteten Eingangswechselspannung (VDC) betrieben wird.

LEDs (LED = Light Emitting Diode, Leuchtdiode) werden zunehmend für Beleuchtungszwecke eingesetzt, da sie gegenüber herkömmlichen Leuchtmitteln wie Glühlampen oder Fluoreszenzlampen eine Reihe von Vorteilen, insbesondere einen geringeren Energiebedarf und eine längere Lebensdauer, aufweisen. Aufgrund ihrer halbleitertypischen Strom-Spannungscharakteristik ist es sinnvoll, LEDs mit einem Konstantstrom zu betreiben.

Beim Betrieb von Leuchtmitteln mit LEDs aus einem Lichtnetz sind daher schaltungstechnische Maßnahmen zu treffen, um aus einer versorgenden hohen Wechselspannung, welche beispielsweise 230 VAC betragen kann, den erforderlichen konstanten Gleichstrom mit der geringen Spannung von typischerweise 3 ... 4 V je LED zu erzeugen. Wobei diese Werte typischerweise für sogenannte weiße LEDs gelten und für andere LEDs abweichen können.

Neben dem verbreiteten Einsatz von sogenannten AC-DC-Konvertern, welche meist aus einem Gleichrichter und einem Schaltnetzteil bestehen, ist ein Verfahren bekannt, bei dem eine Kette von in Reihe geschalteten LEDs über eine oder mehrere lineare Stromquellen direkt aus der gleichgerichteten Wechselspannung angesteuert wird.

Diese Anordnung wird auch als "Direct AC LED" bezeichnet. Dazu kann vorteilhafterweise die LED-Kette in Segmente aufgeteilt werden, die entsprechend der momentanen Wechselspannung einzeln oder hintereinander geschaltet bestromt werden. Die Anzahl der in Reihe geschalteten LEDs und damit die Flussspannung der gesamten LED-Kette wird so ausgelegt, dass sie einem nennenswerten Anteil der Amplitude der Netzspannung entspricht, welcher beispielsweise im Bereich von 80 bis 90% der Amplitude der Netzspannung liegen kann.

Der Spannungsabfall über der linearen Stromquelle wird somit gering gehalten, was zu einem verhältnismäßig hohen Wirkungsgrad führt. Bei geringerer Momentanspannung wird nur ein Teil der LED-Kette, entsprechend der anordnungsseitigen Segmentierung der LEDs, ebenfalls mit relativ geringem Spannungsabfall über der zugehörigen Stromquelle angesteuert. Dadurch wird der Stromflusswinkel innerhalb einer halben Netzperiode vergrößert, was zu einer gleichmäßigeren Lichtabgabe führt. Optional kann der Strom der linearen Stromquelle oder Stromquellen entsprechend der momentanen Netzspannung moduliert werden, um den "Power Factor" zu erhöhen, d. h. den Oberwellengehalt des Versorgungsstroms gering zu halten.

Vorteile dieses bekannten Verfahrens gegenüber der Verwendung von AC-DC Konvertern sind kleinere Bauform und geringere Kosten der Ansteuerelektronik sowie ein besseres EMV-Verhalten (EMV = elektro-magnetische Verträglichkeit) der Anordnung, da keine schnellen Schaltflanken auftreten.

Ein grundsätzlicher Nachteil besteht in der hohen Welligkeit der Lichtabgabe mit der doppelten Netzfrequenz, die von empfindlichen Personen als störend empfunden wird. Selbst bei einer konstanten Bestromung der LEDs reduziert sich die Lichtabgabe, wenn weniger Segmente, als in der LED-Kette angeordnet, aktiv sind.

Wenn die Momentanspannung, mit welcher die LED-Ketten angesteuert werden, unter die Flussspannung des ersten Segments der Ketten absinkt, wird der Strom zu Null, d. h. in jeder Netzperiode gibt es zwei Lücken, in denen die LEDs nicht bestromt werden. Im Gegensatz zum Glühfaden einer Glühlampe, der eine erhebliche thermische Trägheit aufweist und damit die Welligkeit der zugeführten Leistung bedämpft, folgt die Lichtabgabe einer LED dem Strom praktisch verzögerungsfrei. Insbesondere diese Bestromungslücken können zu einem als unangenehm empfundenen Eindruck des "Flimmern" oder "Flackern" der Beleuchtung führen, welcher im englischen als "Flicker" bezeichnet wird.

Ein weiterer schaltungstechnischer Nachteil der Ansteuerung besteht darin, dass die Umschaltschwellen der einzelnen Segmente an die Anzahl der LEDs je Segment und die tatsächliche Flussspannung angepasst werden müssen.

Somit besteht die Aufgabe der Erfindung darin, eine Anordnung und ein Verfahren zur Ansteuerung von Leuchtdioden anzugeben, womit eine verbesserte Ansteuerung der LEDs ohne eine Verschlechterung des Wirkungsgrades und/oder des Oberwellengehalts erreicht wird.

Außerdem soll eine automatische Anpassung der Umschaltschwellen zwischen den LED-Ketten an die Flusspannungen der Segmente der LED-Kette erreicht werden.

Die Schaltungsanordnungen mit den kennzeichnenden Merkmalen der Ansprüche 1 und 2 bieten den Vorteil einer gleichmäßigere Bestromung der LEDs in einer Kette sowie eine Verbesserung des Wirkungsgrads.

Die verfahrensseitige Lösung der vorliegenden Aufgabe ist mit den kennzeichnenden Merkmalen der Ansprüche 6 und 7 gezeigt.

Durch die in den Unteransprüchen aufgeführten Maßnahmen sind vorteilhafte Weiterbildungen und Verbesserungen der in den Hauptansprüchen angegebenen Erfindung möglich.

Die Erfindung soll nachfolgend anhand eines Ausführungsbeispiels näher erläutert werden. In den zugehörigen Zeichnungen zeigt
- Fig. 1: eine mögliche Ausführung einer Anordnung zur Ansteuerung von Leuchtdioden nach dem Stand der Technik in einer Variante als "Direct AC LED Drivers",
- Fig. 2: eine andere mögliche Ausführung einer Anordnung zur Ansteuerung von Leuchtdioden nach dem Stand der Technik in einer Variante als "Direct AC LED Drivers",
- Fig. 3: eine erfindungsgemäße Schaltungsanordnung zur Ansteuerung von Leuchtdioden mit einer automatischen Anpassung der Strompfade an die Flussspannung der LED Segmente,
- Fig. 4: eine weitere erfindungsgemäße Schaltungsanordnung zur Ansteuerung von Leuchtdioden mit einer alternativen automatischen Anpassung mit gestuften Gate-Spannungen,
- Fig. 5: eine Darstellung der Spannungsverläufe der gleichgerichteten Netzspannung und der Segmentspannungen über eine halbe Netzperiode und
- Fig. 6: eine Schaltungsanordnung zur automatischen Steuerung eines "Bleeder Current".

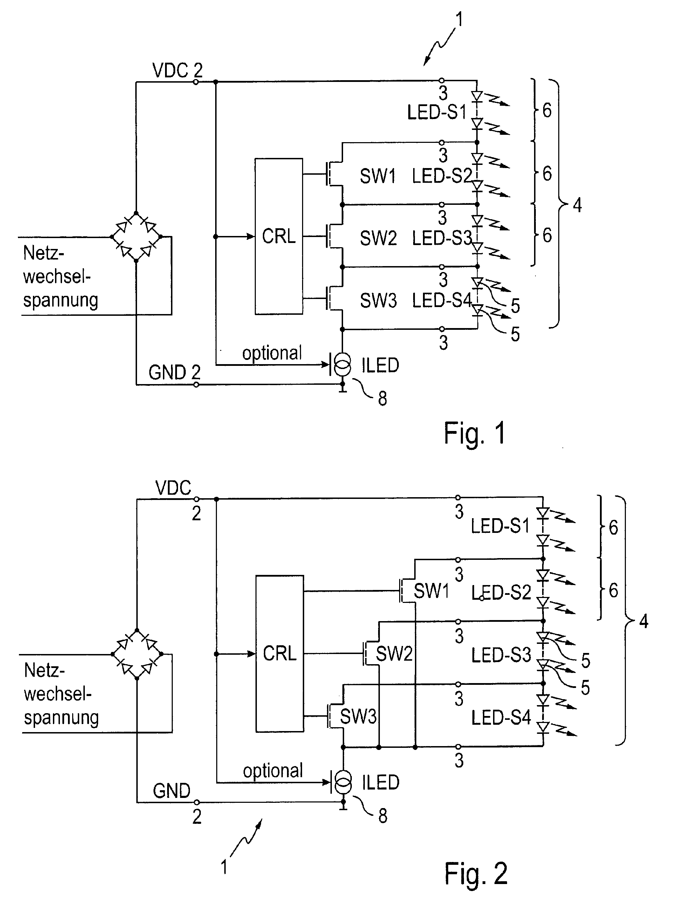

In der Figur 1 und 2 sind zwei mögliche Realisierungen einer Anordnung 1 zur Ansteuerung von Leuchtdioden 5 nach dem Stand der Technik gezeigt. Dargestellt sind sogenannte "Direct AC LED" Treiber mit jeweils vier LED-Segmenten 6, welche mit LED-S1 bis LED-S4 bezeichnet werden. Die Kette 4 wird aus der gleichgerichteten Netzspannung VDC 2 gespeist, wobei eine masseseitige Stromquelle 8 ILED einen Konstantstrom erzeugt.

In der Darstellung in Figur 1 werden die Segmente 6 durch die Schaltelemente SW1 bis SW3, welche beispielsweise als MOSFETs ausgeführt werden können, entsprechend der anliegenden Momentanspannung über der Kette 4 bei Bedarf kurzgeschlossen.

In der Ausgestaltung nach Figur 2 werden die Segment-Abgriffe 7 entsprechend der Momentanspannung über der Kette 4 mittels der Schaltelemente SW1 bis SW3 auf die gemeinsame Stromquelle 8 ILED geschaltet werden. Eine Steuerungseinheit CRL dient dazu, den Strom auf die Anzahl der Segmente 6 passend zur Momentanspannung zu verteilen. Die Stromquelle 8 ILED kann optional entsprechend der momentanen Netzspannung VDC moduliert werden.

Nachfolgend wird die erfindungsgemäße automatische Anpassung der Schaltschwellen an die Flussspannung der Segmente beschrieben.

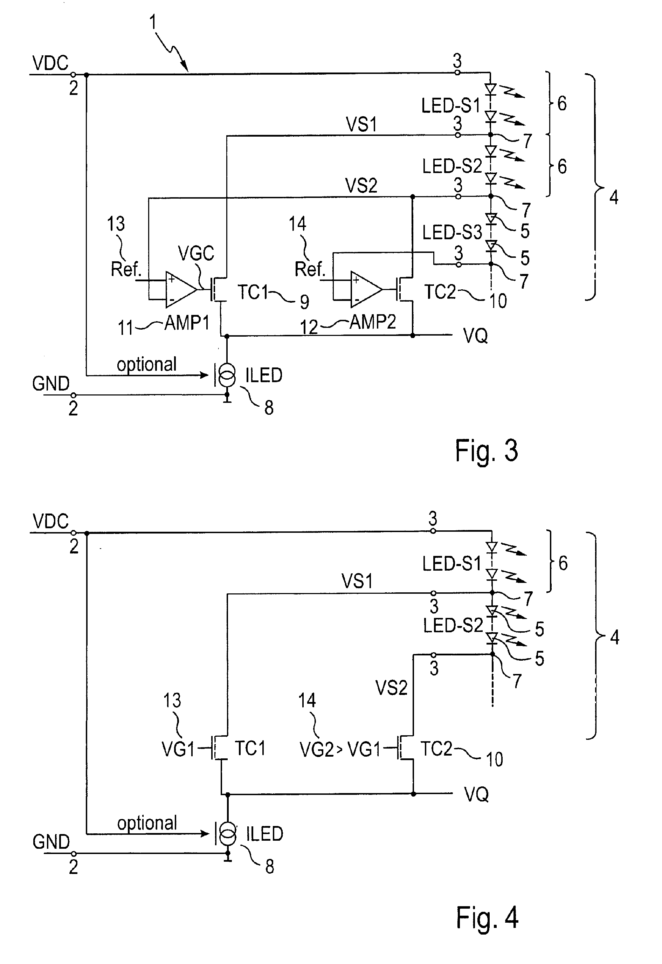

Die Figur 3 zeigt das Prinzip am Beispiel von drei Segmenten 6 LED-S1 bis LED-S3 einer LED-Kette 4 mit einer beliebigen Anzahl von LEDs 5 im jeweiligen Segment 6. Die Anzahl der Segmente 6 kann beliebig erhöht werden, was in der Figur mit einer Strich-Strich-Linie am Anschluss 7 des Segments LED-S3 6 dargestellt ist. Ebenso ist die Anzahl der LEDs 5 je Segment 6 frei wählbar.

Die Anode der "oberen" LED 5 des Segments LED-S1 6 ist mit der Versorgungsspannung VDC 2, d. h. der gleichgerichteten Netzspannung, verbunden. Jedes Segment 6 der Kette 4 weist einen ersten und einen zweiten Anschluss 7 auf. In der Figur 3 ist der erste Anschluss des ersten Segments 6 mit der Spannung VDC verbunden. Der zweite Anschluss 7 des ersten Segments 6 ist mit dem ersten Anschluss des nachfolgenden Segments 6 der Kette 4 verbunden. Außerdem ist dieser zweite Anschluss 7 mit einem Schaltmittel 9, 10, ... verbunden.

Die gesamte LED-Kette 6 wird über diese zu- und abschaltbaren Schaltmittel 9, 10 von einer gemeinsamen masseseitigen Stromquelle 8 ILED gespeist. Oberhalb der Stromquelle 8 befinden sich für jeden Strompfad n als Schaltmittel sogenannte Kaskoden-Elemente TC1 und TC2 9, 10, gebildet beispielsweise durch MOSFETs, Bipolar-Transistoren oder IGBTs. Als Kaskode bezeichnet man die Hintereinanderschaltung zweier Transistoren, wobei der "untere" Transistor (bei n-Kanal oder NPN) die Steuerung übernimmt, während der "obere" Transistor zur Erhöhung der Spannungsfestigkeit und/oder der Ausgangsimpedanz dient.

Derart werden n Stufen innerhalb der Anordnung ausgebildet, welche jeweils ein n-tes LED-Segment 6 und mindestens ein n-tes Schaltmittel 9 oder 10 umfassen. Die erste Stufe umfasst das erste Segment 6 der Kette 4 sowie das erste Schaltmittel 9. Zusätzlich kann auch noch ein das erste Schaltmittel 9 ansteuerndes Element beinhaltet sein. Im Beispiel der Figur 3 ist dies ein erster Komparator oder Verstärker 11 AMP1.

Die Kaskoden-Elemente 9, 10 begrenzen die Spannung VQ über der Stromquelle 8 und nehmen einen Teil der Differenz zwischen momentaner VDC und der Flussspannung der aktiven Segmente 6 der LED-Kette 4 auf. Die an die Kaskoden-Elemente 9, 10 angelegte Gate- bzw. Basisspannung VGC bestimmt die maximale Spannung VQ. Für die automatische Schwellen-Adaption ist es vorteilhaft, diese Spannung niedrig zu halten.

Steigt die Spannung VDC 2 von einem Wert kleiner als die Flussspannung des Segments LED-S1 6 beginnend an, so wird zunächst beim Erreichen der Flussspannung das Segment LED-S1 6 beginnen, Strom zu führen. Ist der durch die Stromquelle 8 begrenzte Strom erreicht und hat VQ den vom Kaskoden-Element 9, 10 begrenzten Wert erreicht, so steigt bei weiterer Erhöhung von VDC 2 die Segmentspannung VS1 an, während VQ annähernd konstant bleibt.

Zunächst fließt kein Strom durch das Segment LED-S2 6 und die Segmentspannung VS2 entspricht etwa der Spannung VQ. Erreicht VDC die Summe der Flussspannungen von LED-S1 6 und LED-S2 6, so beginnt auch LED-S2 6 zu leiten, und der Strom teilt sich zwischen TC1 9 und TC2 10 auf. Der Summenstrom wird weiterhin durch die gemeinsame Stromquelle 8 ILED bestimmt. Bei weiterer Erhöhung von VDC 2 steigt nun die Spannung VS2 gegenüber VQ an. Dieser Anstieg signalisiert, dass LED-S2 6 leitend ist und der Strompfad über TC1 9 abgeschaltet werden kann. Die Abschaltung kann beispielsweise über einen Verstärker oder Komparator 11 AMP erfolgen, dessen Vergleichswert um einen festlegbaren Betrag über der Spannung VQ liegt. Zur Vermeidung von Oszillationen um den Schaltpunkt ist es vorteilhaft, einen Komparator 11 mit einer Hysterese zu versehen. Dies gilt insbesondere für den Fall, dass als Kaskoden-Elemente 9, 10 relativ hochohmige MOSFETs verwendet werden. Bei Einsatz von Bipolartransistoren muss deren Basisstrom begrenzt werden.

Vorteilhaft zur Vermeidung eventueller Störabstrahlung durch die Umschaltvorgänge ist eine graduelle Abschaltung, etwa durch einen Verstärker oder einfachen Inverter beispielsweise mit mäßiger Verstärkung anstelle des Komparators.

Eine Übernahme des Stroms durch TC2 10 ohne Schalten von TC1 9 ist ebenfalls möglich, indem eine Steuerspannung VG2 > VG1 angelegt wird, wie in der Figur 4 dargestellt. Wenn das Segment LED-S2 6 leitend wird, erhöht TC2 10 die Spannung VQ und TC1 9 wird automatisch zugesteuert. Die Spannungsdifferenz zwischen VG2 14 und VG1 13 muss allerdings groß genug sein, damit TC1 9 sicher sperrt, was insbesondere bei einer Integration und Verwendung relativ hochohmiger MOSFETs zu beachten ist.

Bei größerer Anzahl "n" von LED Segmenten kann dies zu einer erheblichen "Spreizung" der steuernden Gate-Spannungen VG1 bis VGn führen. Vorteilhaft ist daher die Kombination der gestuften Ansteuerspannungen mit dem Abschalten vorhergehender Strompfade.

Besteht die LED-Kette 4 aus mehr als zwei Segmenten 6, so wiederholt sich der beschriebene Vorgang bei weiterem Anstieg von VDC 2 für die folgenden Stufen oder Strompfade n+1, n+2 ... usw. Für das "letzte" Segment 6 der Kette 4 ist nicht unbedingt ein Kaskoden-Element 9, 10 erforderlich, es ist jedoch schaltungstechnisch vorteilhaft zur Begrenzung der Spannung VQ. Dieses letzte Kaskoden-Element 9, 10 muss nicht geschaltet werden. In der Figur 3 sind beispielhaft zwei Kaskoden-Elemente 9 und 10 dargestellt.

Nachdem VDC 2 seine Amplitude überschritten hat und die Spannung wieder abfällt, werden mit derselben Schaltung die Kaskoden-Elemente 9, 10 in umgekehrter Reihenfolge entsprechend der momentanen Spannung wieder aktiviert.

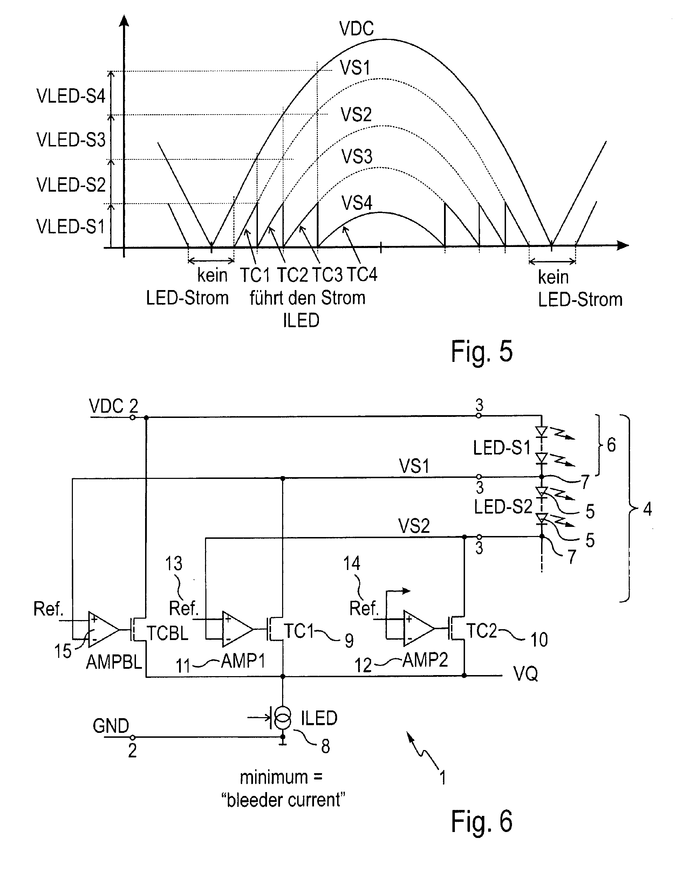

Die Figur 5 zeigt die Spannungsverläufe während einer halben Netzperiode am Beispiel einer LED-Kette 4 bestehend aus vier Segmenten 6 mit gleicher Anzahl von LEDs 5. Dargestellt ist, dass im Bereich um den Nulldurchgang der netzseitigen Wechselspannung 2 keine LED 5 betrieben wird und kein LED-Strom fließt. Im weiteren Zeitverlauf einer positiven Halbwelle steigt die Spannung VDC 2 an, bis die Flussspannungen der LEDs 5 im Segment VLED-S1 6 erreicht wird, Strom durch das Segment VLED-S1 6 fließt und dieses Segment 6 somit leuchtet. Im weiteren Verlauf der positiven Halbwelle steigt die Spannung VDC 2 weiter an, bis die Flussspannungen der LEDs 5 in den Segmenten VLED-S1 6 und VLED-S2 6 erreicht werden. Ab diesem Zeitpunkt fließt Strom auch durch das Segment VLED-S2 6, welches nun ebenfalls leuchtet.

Dieser Vorgang ist weiter dargestellt, bis alle Segmente 6 VLED-S1 bis VLED-S4 stromdurchflossen sind und leuchten. Nach dem Erreichen des Maximums der Spannung VDC 2 nimmt diese sinusförmig ab, was dazu führt, dass die Flussspannung des Segments VLED-S4 6 nicht mehr erreicht wird. Dies führt zur Unterbrechung des Stromflusses im Segment VLED-S4 6 und somit zu dessen Abschaltung. Nachfolgend werden nacheinander die Segmente VLED-S3 6, VLED-S2 6 und VLED-S1 6 abgeschalten, wodurch kein Strom mehr durch die Kette 4 fließt.

Die Ausführung mit gleichartigen Segmenten 6 kann vorteilhaft für die Bestückung einer Applikation sein, ist aber keine Voraussetzung für die Funktionalität des Verfahrens. Der Spannungsabfall VQ über der Stromquelle 8 wurde in der Darstellung zum besseren Verständnis vernachlässigt.

In den Figuren 3, 4 und 6 ist die Konstantstromquelle 8 mit einem Steuereingang dargestellt, über welchen der Konstantstrom steuerbar ist. So kann optional mittels der Eingangsspannung VDC 2 der Stromverlauf der Konstantstromquelle an den beispielsweise sinusförmigen Stromverlauf der gleichgerichtete pulsierenden Eingangsspannung VDC angepasst werden. Diese Anpassung führt durch die Reduzierung von störenden Oberwellen zu einer Verbesserung des sogenannten Powerfaktors.

Für den Betrieb einer LED-Leuchte an einem Dimmer, welcher mittels eines Phasenanschnitts- (Triac) oder Phasenabschnittsverfahrens (MOSFET oder IGBT) arbeitet, muss ein Strompfad zum Aufladen eines Kondensators, der den Stromflusswinkel innerhalb einer Halbwelle der Netzspannung bestimmt, bereitgestellt werden.

Die zuvor beschriebene Schaltung 1 führt erst dann Strom, wenn die Flussspannung des ersten LED-Segments 6 erreicht ist und erst dann kann der zeitbestimmende Kondensator geladen werden. Ohne weitere Maßnahmen verringert sich daher der maximale mit einem Dimmer erreichbare Stromflusswinkel.

Um diese Verkürzung zu vermeiden, ist es vorteilhaft, einen zusätzlichen Strompfad einzurichten, der bereits aktiv ist, wenn die Netzspannung VDC noch kleiner als die Flussspannung des ersten Segments 6, beispielsweise LED-S1, ist.

Dieser Strom wird als "Bleeder Current" bezeichnet, da er nicht zur Ansteuerung der LEDs 5 selbst genutzt wird. In der Figur 6 ist die Schaltung aus Figur 4 um ein Kaskoden- oder Schalt-Element TCBL 16 und einen Komparator bzw. Verstärker 15 AMPBL nach demselben Prinzip erweitert worden. Der "Bleeder Current" fließt so lange, bis VDC die Flussspannung des Segments LED-S1 6 überschritten hat. Dabei steigt die Spannung VS1 an und der Komparator 15 AMPBL deaktiviert den "Bleeder-Pfad". Während TCBL 16 aktiv ist, stellt die Stromquelle ILED 8 den "Bleeder Current" bereit.

Die Polarität der beschriebenen Topologie kann umgedreht werden, d. h. die Stromquelle 8 liegt dann an der positiven Versorgungsspannung (VDC) 2 und die Katode der "untersten" LED 5 an der negativen Versorgung (GND). Ebenso gut kann eine "high side" Stromquelle durch einen masseseitigen oder auch durch einen potenzialgetrennten Stromfühler gesteuert werden.

**Bezugszeichenliste**

| | |
|---|---|
| 1 | LED-Ansteueranordnung |
| 2 | Eingang |
| 3 | Ausgänge |
| 4 | LED-Kette |
| 5 | LED |
| 6 | Segment |
| 7 | Anschluss/Ende |
| 8 | Konstantstromquelle |
| 9 | erster elektronischer Schalter |
| 10 | zweiter elektronischer Schalter |
| 11 | erste Steuereinheit |
| 12 | zweite Steuereinheit |
| 13 | erste Referenzspannung |
| 14 | zweite Referenzspannung |
| 15 | Komparator/Verstärker für "bleeder Strom" |
| 16 | Schaltelement TCBL |

## Patentansprüche

1. Anordnung (1) zur Ansteuerung von Leuchtdioden (5), mit einem Eingang (2), an welchen eine Eingangswechselspannung anlegbar ist und einer mit den Ausgängen (3) der Anordnung (1) zur Ansteuerung von Leuchtdioden verbundenen Kette (4) von in einer Reihe geschalteten LEDs (5), welche in mindestens zwei Segmente (6) unterteilt ist und wobei jedes Segment (6) der Kette (4) mit einem Ende (7) zumindest mittelbar mit einer Konstantstromquelle (8) verbunden ist, **dadurch gekennzeichnet, dass** ein erster Anschluss des Eingangs (2, VDC) mit einem ersten Anschluss eines ersten Segments (6) verbunden ist, dass ein zweiter Anschluss (7) des ersten Segments (6) mit einem ersten Anschluss eines zweiten Segments (6) der gleichen Kette (4) und mit einem ersten Anschluss eines einen Steuereingang aufweisenden ersten elektronischen Schalter (9) verbunden ist, dass der zweite Anschluss des Schalters (9) mit einem ersten Anschluss der Konstantstromquelle (8) verbunden ist, welche mit ihren zweiten Anschluss mit einem Massepotenzial und einem zweiten Anschluss des Eingangs (2, GND) verbunden ist, dass ein zweiter Anschluss (7) des zweiten Segments (6) mit einem ersten Anschluss eines dritten Segments (6) und mit einem ersten Anschluss eines einen Steuereingang aufweisenden zweiten elektronischen Schalters (10) und einem ersten Eingang einer ersten Steuereinheit (11) verbunden ist, dass der zweite Anschluss des Schalters (10) mit dem ersten Anschluss der Konstantstromquelle (8) verbunden ist, dass der zweite Eingang der ersten Steuereinheit (11) mit einer ersten Referenzspannung (13) verbunden ist und dass der Ausgang der ersten Steuereinheit (11) mit dem Steuereingang des ersten elektronischen Schalters (9) verbunden ist, dass ein erster Eingang der zweiten Steuereinheit (12) mit dem zweiten Anschluss (7) des dritten Segments (6) verbunden ist, dass ein zweiter Eingang der zweiten Steuereinheit (12) mit einer zweiten Referenzspannung (14) und der Ausgang der zweiten Steuereinheit (12) mit dem Steuereingang des zweiten elektronischen Schalters (10) verbunden ist.

2. Anordnung (1) zur Ansteuerung von Leuchtdioden (5), mit einem Eingang (2), an welchen eine Eingangswechselspannung anlegbar ist und einer mit den Ausgängen (3) der Anordnung (1) zur Ansteuerung von Leuchtdioden verbundenen Kette (4) von in einer Reihe geschalteten LEDs (5), welche in mindestens zwei Segmente (6) unterteilt ist und wobei jedes Segment (6) der Kette (4) mit einem Ende (7) zumindest mittelbar mit einer Konstantstromquelle (8) verbunden ist, **dadurch gekennzeichnet, dass** ein erster Anschluss des Eingangs (2, VDC) mit einem ersten Anschluss eines ersten Segments (6) verbunden ist, dass ein zweiter Anschluss (7) des ersten Segments (6) mit einem ersten Anschluss eines zweiten Segments (6) der gleichen Kette (4) und mit einem ersten Anschluss eines einen Steuereingang aufweisenden ersten elektronischen Schalter (9) verbunden ist, dass der zweite Anschluss des Schalters (9) mit einem ersten Anschluss der Konstantstromquelle (8) verbunden ist, welche mit ihren zweiten Anschluss mit einem Massepotenzial und einem zweiten Anschluss des Eingangs (2, GND) verbunden ist, dass ein zweiter Anschluss (7) des zweiten Segments (6) mit einem ersten Anschluss eines einen Steuereingang aufweisenden zweiten elektronischen Schalter (10) verbunden ist, dessen zweiter Anschluss mit dem ersten Anschluss der Konstantstromquelle (8) verbunden ist und dass der Steuereingang des ersten elektronischen Schalter (9) mit einer ersten Referenzspannung (13) und der Steuereingang des zweiten elektronischen Schalter (10) mit einer zweiten Referenzspannung (14) verbunden ist.

3. Anordnung nach Anspruch 1 oder 2, **dadurch gekennzeichnet, dass** der erste Anschluss des Eingangs (2, VDC) mit einem Steuereingang der Konstantstromquelle (8) verbunden ist.

4. Anordnung nach einem der Ansprüche 1 bis 3, **dadurch gekennzeichnet, dass** die erste und/oder zweite Steuereinheit (11, 12) ein Verstärker oder Komparator ist.

5. Anordnung nach einem der Ansprüche 1 bis 4, **dadurch gekennzeichnet, dass** der erste und/oder zweite elektronische Schalter (9, 10) ein MOSFET, BipolarTransistor oder IGBT ist.

6. Verfahren zur Ansteuerung von Leuchtdioden, bei welchem eine Kette (4) von in Reihe geschalteten Leuchtdioden (5) bereitgestellt wird, welche in Segmente (6) unterteilt ist, wobei jedes Segment (6) mehrere Leuchtdioden beinhalten kann und einen ersten Anschluss sowie einen zweiten Anschluss (7) aufweist und wobei die Kette mit einer gleichgerichteten Eingangswechselspannung (VDC) betrieben wird, **dadurch gekennzeichnet, dass** an einen ersten Anschluss eines ersten Segments (6) der Kette (4) die Eingangswechselspannung (VDC) anlegbar ist und dass die zweiten Anschlüsse (7) aller Segmente (6) der Kette (4) über je ein Schaltmittel (9, 10) mit einem Mittel zur Erzeugung eines konstanten Stroms (8) verbindbar sind, woraus sich eine Anzahl n von Stufen ergibt, welche jeweils ein n-tes Segment (6) und ein zugehöriges n-tes Schaltmittel (9, 10) umfassen , dass bei einer Amplitude der Eingangswechselspannung (VDC) von Null Volt alle Schaltmittel (9, 10) aller n Stufen durchgeschaltet sind, dass ein Vergleich zwischen einer n-ten Referenzspannung (13, 14) und einer Knotenspannung erfolgt, welche am zweiten Anschluss eines Segmentes (6) der Stufe n+1 messbar ist und dass für den Fall, dass die n-te Referenzspannung kleiner als die zugehörige Knotenspannung wird, dass Schaltmittel der n-ten Stufe gesperrt wird.

7. Verfahren zur Ansteuerung von Leuchtdioden, bei welchem eine Kette (4) von in Reihe geschalteten Leuchtdioden (5) bereitgestellt wird, welche in Segmente (6) unterteilt ist, wobei jedes Segment (6) mehrere Leuchtdioden beinhaltet und einen ersten Anschluss sowie einen zweiten Anschluss (7) aufweist und wobei die Kette mit einer gleichgerichteten Eingangswechselspannung (VDC) betrieben wird, **dadurch gekennzeichnet, dass** an einen ersten Anschluss eines ersten Segments (6) der Kette (4) die Eingangswechselspannung (VDC) anlegbar ist und dass die zweiten Anschlüsse (7) aller Segmente (6) der Kette (4) über je ein Schaltmittel (9, 10) mit einem Mittel zur Erzeugung eines konstanten Stroms (8) verbindbar sind, woraus sich eine Anzahl n von Stufen ergibt, welche jeweils ein n-tes Segment (6) und ein zugehöriges n-tes Schaltmittel (9, 10) umfassen , dass bei einer Amplitude der Eingangswechselspannung (VDC) von Null Volt alle Schaltmittel (9, 10) aller n Stufen durchgeschaltet sind, dass bei einer Amplitude einer n-ten Knotenspannung, welche am zweiten Anschluss eines Segmentes (6) der Stufe n+1 messbar ist, über einen je Stufe vorgegebenen Schwellwert, dass Schaltmittel (9, 10) der Stufe n-1 gesperrt wird.

8. Verfahren nach Anspruch 6 oder 7, **dadurch gekennzeichnet, dass** das Mittel zur Erzeugung eines konstanten Stroms (8) durch die Amplitude der Eingangswechselspannung (VDC) steuerbar ist.

9. Verfahren nach einem der Ansprüche 6 bis 8, **dadurch gekennzeichnet, dass** das ein Strompfad bereitgestellt wird, in welchem für den Fall, dass kein Strom durch die Segmente (6) der Kette (4) fließt, ein einstellbarer Minimalstromfluss erzeugt wird.
